# EUROPÄISCHE PATENTSCHRIFT

(11) **EP 2 092 218 B1**
(45) Veröffentlichungstag und Bekanntmachung des Hinweises auf die Patenterteilung: **15.09.2010**
(21) Anmeldenummer: 07822178.5
(22) Anmeldetag: 05.11.2007
(51) Int. Cl.: F16H 61/00, B60R 16/02

(54) **GETRIEBESTEUERUNG UND VERFAHREN ZUR MONTAGE EINER GETRIEBESTEUERUNG**
TRANSMISSION CONTROL AND METHOD FOR MOUNTING A TRANSMISSION CONTROL
COMMANDE DE BOÎTE DE VITESSE ET PROCÉDÉ DE MONTAGE D'UNE COMMANDE DE BOÎTE DE VITESSE

(30) Priorität: 17.11.2006 DE 102006054279
(43) Veröffentlichungstag der Anmeldung: 26.08.2009
(73) Patentinhaber: ZF Friedrichshafen AG, 88038 Friedrichshafen (DE)
(72) Erfinder: KÖNIG, Hubert, 88074 Meckenbeuren (DE); FÜHRER, Kim, 88131 Lindau (DE); ULBRICHT, Markus, 88069 Tettnang (DE); PUTH, Thomas, 88046 Friedrichshafen (DE)
(86) Internationale Anmeldenummer: PCT/EP2007/061849
(87) Internationale Veröffentlichungsnummer: WO 2008/058861

(56) Entgegenhaltungen:
- DE-A1- 10 303 078
- DE-A1- 19 710 931
- DE-A1-102005 015 768
- DE-C1- 19 955 603
- US-A- 5 361 650

## Beschreibung

Die vorliegende Erfindung betrifft eine Getriebesteuerung aufweisend eine elektronische Steuerungseinheit, mindestens eine Mechatronikkomponente und ein mehrteiliges Gehäuse mit einem Gehäuseoberteil, einem Gehäuseunterteil und einem Gehäusemittelteil, das unter Ausbildung mindestens eines Aufnahmeraumes für die Steuerungseinheit und/oder die Mechatronikkomponente zwischen dem Gehäuseoberteil und dem Gehäuseunterteil angeordnet ist. Die vorliegende Erfindung betrifft ferner ein Verfahren zur Montage einer solchen Getriebesteuerung.

Aus dem Stand der Technik sind unterschiedliche Gehäuse für Getriebesteuerungen bekannt. So ist aus der Praxis insbesondere ein Steuergerät für ein Getriebe bekannt, das ein mehrteiliges Gehäuse aufweist. Dieses Gehäuse umfasst einen Metalldeckel und ein Gehäuseunterteil, wobei zwischen dem Metalldeckel und dem Gehäuseunterteil ein Rahmenteil vorgesehen ist, so dass ein Raum für die elektronische Steuerungseinheit sowie die Mechatronikkomponenten der Getriebesteuerung entsteht. Das bekannte Steuergerät wird dann mit dem Gehäuseunterteil an dem Getriebe bzw. dem Getriebegehäuse befestigt.

Das bekannte Steuergerät hat sich bewährt, ist jedoch insofern von Nachteil, als dass es aufwendig konstruiert ist und lediglich mit größerem Aufwand montiert bzw. zusammengebaut werden kann.

Eine Getriebesteuerung mit den Merkmalen des Oberbegriffs des Anspruchs 1 ist aus dem Dokument DE-A1-10 2005 015 768 bekannt.

Weitere Arten von Getriebesteuerungen sind aus den Dokumenten DE-A1-197 10 931, DE-C1-199 55 603 und US-A-5 361 650 bekannt.

Der vorliegenden Erfindung liegt somit die Aufgabe zugrunde, eine Getriebesteuerung mit einer elektronischen Steuerungseinheit, mindestens einer Mechatronikkomponente und einem mehrteiligen Gehäuse zu schaffen, die einfach montiert bzw. zusammengebaut werden kann. Ferner soll eine einfache Prüfung der Steuerungseinheit sowie der Mechatronikkomponenten vor und nach der Montage möglich sein. Der vorliegenden Erfindung liegt ferner die Aufgabe zugrunde, ein Verfahren zur Montage einer solchen vorteilhaften Getriebesteuerung anzugeben.

Die Lösung dieser Aufgabe erfolgt anhand der in Patentanspruch 1 bzw. 16 angegebenen Merkmale. Vorteilhafte Ausführungsformen der Erfindung sind Gegenstand der Unteransprüche.

Die erfindungsgemäße Getriebesteuerung weist eine elektronische Steuerungseinheit, mindestens eine Mechatronikkomponente und ein mehrteiliges Gehäuse auf. Die elektronische Steuerungseinheit dient der Steuerung der Mechatronikkomponenten. Unter Mechatronikkomponenten können Sensoren und Aktuatoren der Getriebesteuerung verstanden werden. Das mehrteilige Gehäuse umfasst ein Gehäuseoberteil, das beispielsweise als abdeckender Deckel ausgebildet sein kann, ein Gehäuseunterteil, das beispielsweise von dem Getriebegehäuse selbst gebildet werden kann, und ein Gehäusemittelteil. Das Gehäusemittelteil ist unter Ausbildung mindestens eines Aufnahmeraumes für die Steuerungseinheit und/oder die Mechatronikkomponente zwischen dem Gehäuseoberteil und dem Gehäuseunterteil angeordnet. So kann das Gehäusemittelteil beispielsweise als umlaufender Rahmen ausgebildet sein, innerhalb dessen sich Querstreben erstrecken, um mehrere Aufnahmeräume zu erzeugen. Des weiteren ist die Steuerungseinheit und/oder die mindestens eine Mechatronikkomponente an dem Gehäuseteil befestig.

Erfindungsgemäß ist die elektronische Steuerungseinheit und/oder die mindestens eine Mechatronikkomponente unter Zwischenlage eines Gehäusemittelteilabschnitts an dem Gehäuseoberteil befestigt. Auf diese Weise wird auch das Gehäusemittelteil automatisch an dem Gehäuseoberteil befestigt, wodurch die Montage weiter vereinfacht ist. Des weiteren ist das Gehäusemittelteil durch Befestigen der elektronischen Steuerungseinheit und/oder der mindestens einen Mechatronikkomponente an dem Gehäuseoberteil ebenfalls an dem Gehäuseoberteil befestigt.

Durch Befestigung der Steuerungseinheit und/oder der Mechatronikkomponente an dem Gehäuseoberteil ist eine besonders einfache Montage der Getriebesteuerung gewährleistet. So können die Mechatronikkomponenten zunächst alle an dem Gehäuseoberteil befestigt werden, bevor diese mitsamt dem Gehäuseoberteil an dem Getriebe bzw. an den anderen Komponenten des mehrteiligen Gehäuses befestigt werden. Zuvor ist eine einzelne Prüfung der Steuerungseinheit und/oder der Mechatronikkomponenten möglich.

Um die Montage weiter zu vereinfachen, ist das Gehäuseoberteil in einer bevorzugten Ausführungsform der erfindungsgemäßen Getriebesteuerung einstückig ausgebildet. So können zunächst alle Mechatronikkomponenten an dem einstückigen Gehäuseoberteil befestigt werden, das anschließend in einem Stück mit dem Getriebe oder den anderen Komponenten des mehrteiligen Gehäuses verbunden werden kann.

Vorzugsweise werden lediglich die Mechatronikkomponenten unter Zwischenlage eines Gehäusemitteilabschnitts an dem Gehäuseoberteil befestigt, während die elektronische Steuerungseinheit unmittelbar an dem Gehäuseoberteil befestigt ist.

Gemäß einer weiteren bevorzugten Ausführungsform der erfindungsgemäßen Getriebesteuerung sind an dem Gehäusemittelteil elektrische Leiter zum Verbinden der elektronischen Steuerungseinheit und/oder der Mechatronikkomponenten vorgesehen. Derartige elektrische Leiter können beispielsweise in das Gehäusemittelteil eingegossen sein, wenn dieses aus Kunststoff besteht. Es sind ferner Anschlüsse der elektrischen Leiter an dem Gehäusemittelteil angeordnet, wobei diese derart angeordnet sind, dass die elektronische Steuerungseinheit und/oder die Mechatronikkomponente automatisch mit dem Anschluss verbunden ist, wenn die Steuerungseinheit und/oder die Mechatronikkomponente an dem Gehäuseoberteil befestigt ist. Durch die Montage der Steuerungseinheit und/oder der Mechatronikkomponenten an dem Gehäuseoberteil wird somit automatisch eine Verbindung zu den elektrischen Leitern hergestellt, wodurch die Montage erheblich vereinfacht ist.

In einer vorteilhaften Ausführungsform der erfindungsgemäßen Getriebesteuerung ist die elektronische Steuerungseinheit unmittelbar an dem Gehäuseoberteil befestigt. Auf diese Weise kann beispielsweise eine räumliche Trennung zu den weniger störanfälligen Mechatronikkomponenten der Getriebesteuerung geschaffen werden.

Gemäß einer weiteren vorteilhaften Ausführungsform der erfindungsgemäßen Getriebesteuerung ist das Gehäusemittelteil derart ausgebildet, dass ein erster Aufnahmeraum besteht, der lediglich durch das Gehäuseoberteil und das Gehäusemittelteil begrenzt ist. Der erste Aufnahmeraum ist gegenüber anderen Aufnahmeräumen für die Mechatronikkomponenten der Getriebesteuerung abgedichtet und nimmt lediglich die elektronische Steuerungseinheit auf. Auf diese Weise ist ein besonders zuverlässiger Schutz der störanfälligeren Steuerungseinheit gewährleistet.

In einer weiteren vorteilhaften Ausführungsform der erfindungsgemäßen Getriebesteuerung sind an dem Gehäuseoberteil, dem Gehäuseunterteil und/oder dem Gehäusemittelteil Dichtmittel vorgesehen, durch die eine gegenseitige Abdichtung zwischen den Aufnahmeräumen oder eine Abdichtung der Aufnahmeräume gegenüber der Umgebung gewährleistet ist. Diese Dichtmittel können beispielsweise umlaufende Dichtringe umfassen, die auf den einander zugewandten Seiten der Gehäusebestandteile angeordnet sind, um eine Abdichtung an den aneinander angenzenden Bereichen zu gewährleisten.

Um die Montage weiter zu vereinfachen, ist die elektronische Steuerungseinheit und/oder die Mechatronikkomponente in einer weiteren vorteilhaften Ausführungsform der erfindungsgemäßen Getriebesteuerung mit Hilfe von Schrauben an dem Gehäuseoberteil befestigt. Vorzugsweise sind jedoch lediglich die Mechatronikkomponenten auf diese Weise befestigt, wohingegen die elektronische Steuerungseinheit in einfacher Weise mittels eines Haftmittels an dem Gehäuseoberteil befestigt sein kann.

Gemäß einer weiteren bevorzugten Ausführungsform der erfindungsgemäßen Getriebesteuerung erstrecken sich die Schrauben durch Aussparungen in der Steuerungseinheit und/oder Mechatronikkomponente und/oder in dem Gehäusemittelteil, wobei in der Aussparung eine Buchse vorgesehen ist. Eine derartige Buchse sollte härter als das umgebende Material der Aussparung sein, um das entsprechende Teil vor Beschädigungen zu schützen.

In einer weiteren vorteilhaften Ausführungsform der erfindungsgemäßen Getriebesteuerung bestehen das Gehäuseoberteil und das Gehäuseunterteil aus Metall, während das Gehäusemittelteil aus Kunststoff besteht. Während das Gehäuseoberteil und das Gehäuseunterteil aus Metall einen guten Schutz der Steuerungseinheit und/oder der Mechatronikkomponenten gewährleisten, ermöglicht das Gehäusemittelteil aus Kunststoff ein einfaches Verbinden der genannten Komponenten, zumal die elektrischen Leiter einfach in das Gehäusemittelteil eingegossen sein können.

Gemäß einer weiteren vorteilhaften Ausführungsform der erfindungsgemäßen Getriebesteuerung ist das Gehäuseunterteil einstückig mit einem Getriebegehäuse ausgebildet. Hierdurch wird ein besonders kompakter Aufbau der Getriebesteuerung erzielt.

Gemäß einer weiteren besonders bevorzugten Ausführungsform der erfindungsgemäßen Getriebesteuerung ist das Gehäuseoberteil unter Zwischenlage des Gehäusemittelteils und des Gehäuseunterteils an einem Getriebegehäuse befestigt. Auch hierdurch wird die Montage erheblich vereinfacht, da lediglich das Gehäuseoberteil an dem Getriebegehäuse befestigt werden muss, um auch die restlichen Bestandteile der Getriebesteuerung an dem Getriebegehäuse zu befestigen, nämlich die elektronische Steuerungseinheit, die Mechatronikkomponenten, das Gehäusemittelteil und das Gehäuseunterteil, sofern letzteres nicht ohnehin einstückig mit dem Getriebegehäuse ausgebildet ist.

Gemäß einer weiteren bevorzugten Ausführungsform der erfindungsgemäßen Getriebesteuerung grenzen das Gehäuseoberteil und das Gehäuseunterteil nur mittelbar aneinander an. So kann das Gehäuseoberteil beispielsweise über die Befestigungsschrauben an das Gehäuseunterteil angrenzen, jedoch nicht unmittelbar, vielmehr ist durch das zwischenliegende Gehäusemittelteil eine thermische Entkopplung des Gehäuseoberteils von dem Gehäuseunterteil bzw. dem Getriebegehäuse bewirkt, so dass die an dem Gehäuseoberteil befestigte elektronische Steuerungseinheit besonders gut geschützt ist.

Gemäß einer weiteren bevorzugten Ausführungsform der erfindungsgemäßen Getriebesteuerung ist das Gehäusemittelteil von außen sichtbar zwischen dem Gehäuseoberteil und dem Gehäuseunterteil angeordnet. Auch hierdurch ist die Montage der erfindungsgemäßen Getriebesteuerung stark vereinfacht.

In einer vorteilhaften Ausführungsform der erfindungsgemäßen Getriebesteuerung ist an dem Gehäusemittelteil ein äußerer Anschluss zum Verbinden der elektronischen Steuerungseinheit mit einer externen Einrichtung vorgesehen. Die externe Einrichtung könnte beispielsweise eine manuell betätigbare Steuerungseinrichtung sein. Dieser äußere Anschluss lässt sich an dem Gehäusemittelteil besonders gut und einfach realisieren, wenn das Gehäusemittelteil aus Kunststoff hergestellt ist.

In einer weiteren vorteilhaften Ausführungsform der erfindungsgemäßen Getriebesteuerung ist die Mechatronikkomponente ein Sensor, wie beispielsweise ein Wegsensor, Positionssensor oder ähnliches, oder ein Aktuator, wie beispielsweise ein Wählmagnet, ein Ventilmodul oder ähnliches.

Das erfindungsgemäße Verfahren zur Montage einer Getriebesteuerung umfasst die folgenden Verfahrensschritte: Bereitstellen eines Gehäuseoberteils, eines Gehäusemittelteils und eines Gehäuseunterteils sowie einer elektronischen Steuerungseinheit und mindestens einer Mechatronikkomponente der Getriebesteuerung, Befestigen der elektronischen Steuerungseinheit unmittelbar an den Gehäuseoberteil Befestigen der mindestens einen Mechatronikkomponente an dem Gehäuseoberteil unter Zwischenlage eines Gehäusemittelteilabschnitts und Befestigen des Gehäuseoberteils mitsamt der elektronischen Steuerungseinheit und der mindestens einen Mechatronikkomponente und dem Gehäusemittelteil an dem Gehäuseunterteil. Bezüglich der möglichen weiteren Ausbildung der Einzelteile sei auf die Beschreibung der erfindungsgemäßen Getriebesteuerung verwiesen. Bezüglich der Vorteile des erfindungsgemäßen Verfahrens sei ebenfalls auf die vorangehende Beschreibung der erfindungsgemäßen Getriebesteuerung verwiesen.

Die Erfindung wird im Folgenden anhand einer beispielhaften Ausführungsform unter Bezugnahme auf die zugehörigen Zeichnungen näher erläutert.

Es zeigen:
- Fig. 1: eine Seitensicht einer Ausführungsform der erfindungsge- mäßen Getriebesteuerung in geschnittener Darstellung und
- Fig. 2: den Ausschnitt A von Fig. 1 in vergrößerter Darstellung.

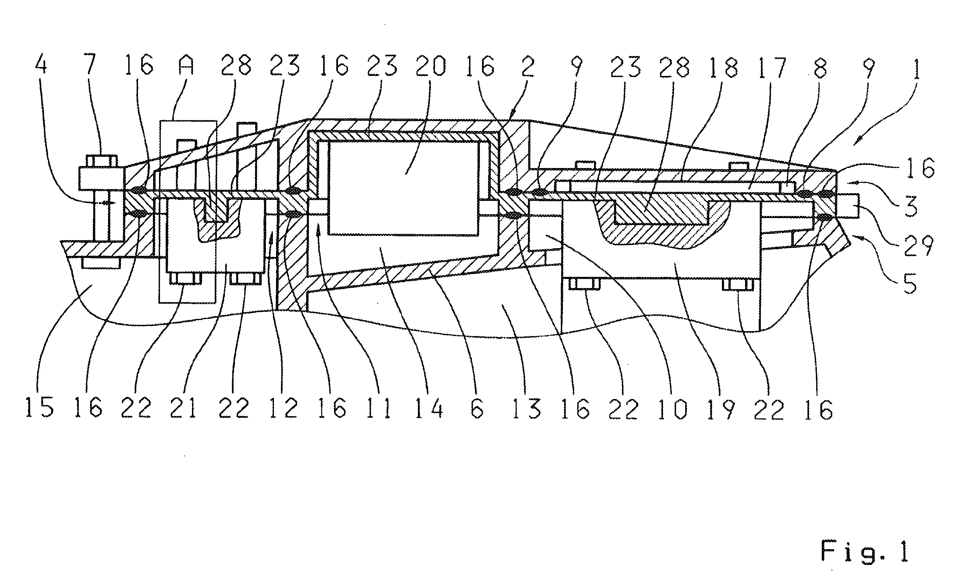

Fig. 1 zeigt eine Seitenansicht einer Ausführungsform der erfindungsgemäßen Getriebesteuerung 1 in geschnittener Darstellung. Die Getriebesteuerung 1 weist ein mehrteiliges Gehäuse 2 auf. Das mehrteilige Gehäuse 2 setzt sich aus einem deckelartigen Gehäuseoberteil 3, einem Gehäusemittelteil,4 und einem Gehäuseunterteil 5 zusammen, wobei das Gehäuseunterteil 5 einstückig mit einem Getriebegehäuse 6 ausgebildet ist. Das Gehäuseoberteil 3 sowie das Gehäuseunterteil 5 bestehen aus Metall, wohingegen das Gehäusemittelteil 4 aus Kunststoff gebildet ist.

Das Gehäuseoberteil 2 ist unter Zwischenlage des Gehäusemittelteils 4 und des Gehäuseunterteils 5 über Schrauben 7 o. ä. an dem Getriebegehäuse 6 befestigt. Dabei grenzen das Gehäuseoberteil 3 und das Gehäuseunterteil 5 lediglich mittelbar aneinander an, das heißt, ein unmittelbares Angrenzen des Gehäuseoberteils 3 an das Gehäuseunterteil 5 findet nicht statt, da das Gehäusemittelteil 4 dazwischen angeordnet ist. Das Gehäusemittelteil 4 ist dabei von außen sichtbar sandwichartig zwischen dem Gehäuseoberteil 3 und dem Gehäuseunterteil 5 angeordnet, was eine Montage der Getriebesteuerung 1 erheblich vereinfacht.

Das Gehäuseoberteil 3, das Gehäusemittelteil 4 und das Gehäuseunterteil 5 sind derart ausgebildet, dass diese im Verbund Aufnahmeräume ausbilden. So besteht zwischen dem Gehäuseoberteil 3 und dem Gehäusemittelteil 4 ein erster Aufnahmeraum 8, der lediglich durch das Gehäuseoberteil 3 und das Gehäusemittelteil 4 begrenzt ist. Der erste Aufnahmeraum 8 ist dabei gegenüber den anderen Aufnahmeräumen mit Hilfe eines Dichtmittels 9, bei dem es sich beispielsweise um einen Dichtring handeln kann, abgedichtet. Darüber hinaus sind ein zweiter Aufnahmeraum 10, ein dritter Aufnahmeraum 11 und ein vierter Aufnahmeraum 12 zwischen dem Gehäusemittelteil 4 einerseits und dem Gehäuseunterteil 5 bzw. dem Getriebegehäuse 6 andererseits vorgesehen. Der zweite Aufnahmeraum 10 steht dabei mit dem Ölraum 13 des Getriebegehäuses 6, der dritte Aufnahmeraum 11 mit dem Pneumatikraum 14 des Getriebegehäuses 6 und der vierte Aufnahmeraum 12 mit dem Kupplungsraum 15 des Getriebegehäuses 6 in Verbindung. Im Bereich der aneinander angrenzenden Flächen von Gehäusemittelteil 4 und Gehäuseunterteil 5 sind wiederum Dichtmittel 16 vorgesehen, die ebenfalls als Dichtringe ausgebildet sein können, die eine gegenseitige Abdichtung zwischen den Aufnahmeräumen 10, 11, 12 oder eine Abdichtung der Aufnahmeräume 10, 11, 12 gegenüber der Umgebung bewirken. Auch das zuvor beschriebene Dichtmittel 9 bewirkt eine Abdichtung des ersten Aufnahmeraumes 8 gegenüber der Umgebung und den anderen Aufnahmeräumen 10, 11, 12.

In dem ersten Aufnahmeraum 8 ist eine elektronische Steuerungseinheit 17 angeordnet, die mittels eines Klebers unmittelbar in einer Vertiefung 18 innerhalb des Gehäuseoberteils 3 befestigt ist. In diesem ersten Aufnahmeraum 8 befindet sich somit lediglich die elektronische Steuerungseinheit 17, die dadurch besonders vor äußeren Einflüssen geschützt ist. In dem zweiten Aufnahmeraum 10 ist eine erste Mechatronikkomponente 19 angeordnet, die als Sensormodul ausgebildet ist. In dem dritten Aufnahmeraum 11 ist eine zweite Mechatronikkomponente 20 angeordnet, die im vorliegenden Beispiel als Ventilmodul ausgebildet ist. In dem vierten Aufnahmeraum 12 ist eine dritte Mechatronikkomponente 21 angeordnet, die als Kupplungssensor ausgebildet ist.

Die erste, zweite und dritte Mechatronikkomponente 19, 20, 21 sind dabei an dem Gehäuseoberteil 3 mit Hilfe von Schrauben 22 befestigt. Die genannten Mechatronikkomponenten 19, 20, 21 sind dabei ferner unter Zwischenlage eines Gehäusemittelteilabschnitts 23 an dem Gehäuseoberteil 3 befestigt. Auf diese Weise ist auch das Gehäusemittelteil 4 durch Befestigen der Mechatronikkomponenten 19, 20, 21 an dem Gehäuseoberteil 3 befestigt. Überdies ist das Gehäuseoberteil 3 einstückig ausgebildet, so dass alle Mechatronikkomponenten an demselben Gehäuseoberteil 3 befestigt werden können, bevor es zur Montage der Getriebesteuerung 1 kommt.

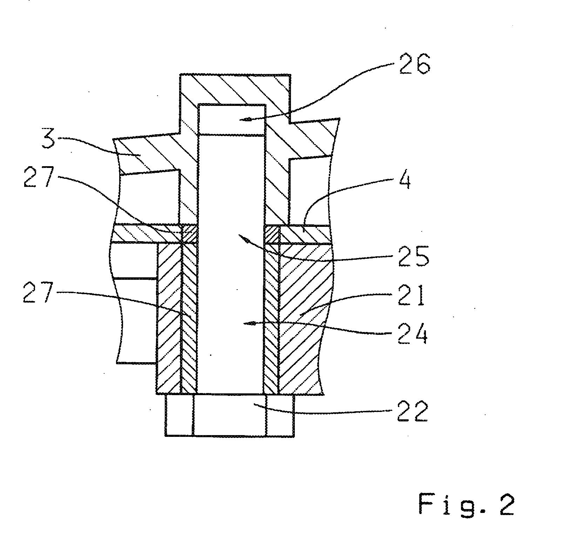

Fig. 2 zeigt die Befestigung der dritten Mechatronikkomponente 21 mit Hilfe der Schrauben 22 in geschnittener Darstellung beispielhaft für die anderen Mechatronikkomponenten 19, 20. So erstrecken sich die Schrauben 22 durch , eine Aussparung 24 in der dritten Mechatronikkomponente 21, durch eine Aussparung 25 in dem Gehäusemittelteil 4 und in eine Bohrung 26 in dem Gehäuseoberteil 3, in der ein Gewinde (nicht dargestellt) vorgesehen ist. Um die Mechatronikkomponente 21 und das Gehäusemittelteil 4 im Bereich der Aussparungen 24, 25 zu schützen, sind in den Aussparungen 24, 25 hülsenförmige Buchsen 27 aus Metall vorgesehen, durch die sich die Schraube 22 erstreckt.

Das Gehäusemittelteil 4 weist ferner eingegossene elektrische Leiter zum Verbinden der elektronischen Steuerungseinheit und/oder der Mechatronikkomponenten 19, 20, 21 auf, die in das Gehäusemittelteil 4 eingegossen sind. Ferner sind an dem Gehäusemittelteil 4 Anschlüsse 28 der elektrischen Leiter (nicht dargestellt) angeordnet. Die Anschlüsse 28 sind dabei derart angeordnet, dass die elektronische Steuerungseinheit 17 und die Mechatronikkomponenten 19, 20, 21 automatisch mit dem jeweiligen Anschluss 28 verbunden sind, wenn die Steuerungseinheit 17 bzw. die Mechatronikkomponenten 19, 20, 21 unter Zwischenlage des Gehäusemittelteils 4 an dem Gehäuseoberteil 3 befestigt werden. An dem Gehäusemittelteil 4 ist ferner ein äußerer Anschluss 29 zum Verbinden der elektronischen Steuerungseinheit 17 mit einer externen Einrichtung, wie beispielsweise einer manuell betätigbaren Steuereinrichtung, vorgesehen.

Nachstehend wird das erfindungsgemäße Verfahren zur Montage der Getriebesteuerung 1 erläutert. Zunächst wird die elektronische Steuerungseinheit 17 in der Vertiefung 18 in dem Gehäuseoberteil 3 befestigt, indem diese in die Vertiefung eingeklebt wird. Die elektronische Steuerungseinheit 17 ist somit unmittelbar an dem Gehäuseoberteil 3 befestigt. Anschließend wird das Gehäusemittelteil 4 an das Gehäuseoberteil 3 angelegt. Danach werden die Mechatronikkomponenten 19, 20, 21 unter Zwischenlage der Gehäusemittelteilabschnitte 23 an dem Gehäuseoberteil 3 mit Hilfe der Schrauben 22 befestigt. Auf diese Weise ist eine Einheit, bestehend aus Gehäuseoberteil 3, Gehäusemittelteil 4, elektronischer Steuerurigseinheit 17 und Mechatronikkomponenten 19, 20, 21 entstanden, wobei durch die Anschlüsse 28 und die elektrischen Leiter (nicht dargestellt) in dem Gehäusemittelteil 4 bereits eine elektrische Verbindung zwischen der Steuerungseinheit 17 und den Mechatronikkomponenten 19, 20, 21 entstanden ist. Anschließend muss nur noch das Gehäuseoberteil 3 mitsamt der elektronischen Steuerungseinheit 17, den Mechatronikkomponenten 19, 20, 21 und dem Gehäusemittelteil 4 an dem Gehäuseunterteil 5 befestigt werden. Dies geschieht, indem das Gehäuseoberteil 3 über die Schrauben 7 direkt, das heißt, nicht nur über das Gehäusemittelteil 4 oder das Gehäuseunterteil 5, mit dem Getriebegehäuse 6 verbunden wird.

### Bezugszeichen

- 1: Getriebesteuerung
- 2: mehrteiliges Gehäuse
- 3: Gehäuseoberteil
- 4: Gehäusemittelteil
- 5: Gehäuseunterteil
- 6: Getriebegehäuse
- 7: Schraube
- 8: erster Aufnahmeraum
- 9: Dichtmittel
- 10: zweiter Aufnahmeraum
- 11: dritter Aufnahmeraum
- 12: vierter Aufnahmeraum
- 13: Ölraum
- 14: Pneumatikraum
- 15: Kupplungsraum
- 16: Dichtmittel
- 17: elektronische Steuerungseinheit
- 18: Vertiefung
- 19: erste Mechatronikkomponente
- 20: zweite Mechatronikkomponente
- 21: dritte Mechatronikkomponente
- 22: Schrauben
- 23: Getriebemittelteilabschnitte
- 24: Aussparung
- 25: Aussparung
- 26: Bohrung
- 27: Buchse
- 28: Anschluss
- 29: äußerer Anschluss

## Patentansprüche

1. Getriebesteuerung (1) aufweisend eine elektronische Steuerungseinheit (17), mindestens eine Mechatronikkomponente (19, 20,21) und ein mehrteiliges Gehäuse (2) mit einem Gehäuseoberteil (3), einem Gehäuseunterteil (5) und einem Gehäusemittelteil (4), das unter Ausbildung mindestens eines Aufnahmeraumes (8, 10, 11, 12) für die Steuerungseinheit (17) und die mindestens eine Machatronikkomponente (19,20, 21) zwischen dem Gehäuseoberteil (3) und dem Gehäuseunterteil (5) angeordnet ist, wobei die Steuerungseinheit (17) und die mindestens eine Mechatronikkomponente (19, 20, 21) an dem Gehäuseoberteil (3) befestigt sind, **dadurch gekennzeichnet, dass** die elektronische Steuerungseinheit (17) und/oder die mindestens eine Mechatronikkomponente (19, 20, 21) unter Zwischenlage eines Gehäusemittelteilabschnitts (23) an dem Gehäuseoberteil (3) befestigt ist und das Gehäusemittelteil (4) durch Befestigen der elektronischen Steuerungseinheit (17) und/oder der mindestens einen Mechatronikkomponente (19,20, 21) an dem Gehäuseolberteil (3) ebenfalls an dem Gehäuseoberteil (3) befestigt ist.

2. Getriebesteuerung nach Anspruch 1, **dadurch gekennzeichnet, dass** das Gehäuseoberteil (3) einstückig ausgebildet ist.

3. Getriebesteuerung nach einem der Ansprüche 1 oder 2, **dadurch gekennzeichnet, dass** an dem Gehäusemittelteil (4) elektrische Leiter zum Verbinden der elektronischen Steuerungseinheit (17) und/oder der mindestens einen Mechatronikkomponente (19, 20, 21) vorgesehen sind, wobei die Anschlüsse (28) der elektrischen Leiter derart an dem Gehäusemittelteil (4) angeordnet sind, dass die elektronische Stauerungseinheit (17) und/oder die mindestens eine Mechatronikkomponente (19, 20, 21) automatisch mit dem Anschluss (28) verbunden ist, wenn die Steuerungseinheit (17) und/oder die mindestens eine Mechatronikkomponente (19, 20, 21) an dem Gehäuseoberteil (3) befestigt ist.

4. Getriebesteuerung nach einem der vorangehenden Ansprüche, **dadurch gekennzeichnet, dass** die elektronische Steuerungseinheit (17) unmittelbar an dem Gehäuseoberteil (3) befestigt ist,

5. Getriebesteuerung nach Anspruch 4, **dadurch gekennzeichnet, dass** das Gehäusemittelteil (4) derart ausgebildet ist, dass ein erster Aufnahmeraum (8) besteht, der lediglich durch das Gehäuseoberteil (3) und das Gehäusemitteiteil (4) begrenzt, der gegenüber anderen Aufnahmeräumen (10, 11, 12) für Mechatronikkomponenten (19, 20, 21) abgedichtet und in dem lediglich die elektronische Steuerungseinheit (17) angeordnet ist

6. Getriebesteuerung nach einem der vorangehenden Ansprüche, **dadurch gekennzeichnet, dass** an dem Gehäuseoberteil (3), dem Gehäuseunterteil (5) und/oder dem Gehäusemiteiteil (4) Dichtmittel (9, 16) vorgesehen sind, durch die eine gegenseitige Abdichtung zwischen den Aufnahmeräumen (8, 10, 11, 12) oder eine Abdichtung der Aufnahmeräume (8, 10, 11, 12) gegenüber der Umgebung bewirkt ist.

7. Getriebesteuerung nach einem der vorangehenden Ansprüche, **dadurch gekennzeichnet, dass** die elektronische Steuerungseinheit (17) und/oder die mindestens eine Mechatronikkomponente (19, 20, 21) mit Hilfe von Schrauben (22) an dem Gehäuseoberteil (3) befestigt sind.

8. Getriebesteuerung nach Anspruch 7, **dadurch gekennzeichnet, dass** das sich die Schrauben (22) durch Aussparungen (24, 25) in der Steuerungseinheit (17) und/oder in der mindestens eine Mechatronikkomponente (19, 20, 21) und/oder in dem Gehäusemittelteil (4) erstrecken, wobei in der Aussparung (24, 25) eine Buchse (27) vorgesehen ist.

9. Getriebesteuerung nach einem der vorangehenden Ansprüche, **dadurch gekennzeichnet, dass** das Gehäuseoberteil (3) und das Gehäuseunterteil (5) aus Metall bestehen, während das Gehäusemittelteil (4) aus Kunststoff besteht.

10. Getriebesteuerung nach einem der vorangehenden Ansprüche, **dadurch gekennzeichnet, dass** das Gehäuseunterteil (5) einstückig mit einem Getriebegebäuse ausgebildet ist.

11. Getriebesteuerung nach einem der vorangehenden Ansprüche, **dadurch gekennzeichnet, dass** das Gehäuseoberteil (3) unter Zwischenlage des Gehäusemittelteils (4) und des Gehäuseunterteils (5) an einem Getriebegehäuse (6) befestigt ist.

12. Getriebesteuerung nach einem der vorangehenden Ansprüche, **dadurch gekennzeichnet, dass** das Gehäuseoberteil (3) und das Gehäuseunterteil (5) nur mittelbar aneinander angrenzen.

13. Getriebesteuerung nach einem der vorangehenden Ansprüche, **dadurch gekennzeichnet, dass** das Gehäusemittelteil (4) von außen sichtbar zwischen dem Gehäuseoberteil (3) und dem Gehäuseunterteil (5) angeordnet ist.

14. Getriebesteuerung nach einem der vorangehenden Ansprüche, **dadurch gekennzeichnet, dass** an dem Gehäusemittelteil (4) ein äußerer Anschluss (29) zum Verbinden der elektronischen Steuerungseinheit (17) mit einer externen Einrichtung vorgesehen ist.

15. Getriebesteuerung nach einem der vorangehenden Ansprüche, **dadurch gekennzeichnet, dass** die mindestens eine Mechatronikkomponente (19, 20, 21) ein Sensor oder ein Aktuator ist.

16. Verfahren zur Montage einer Getriebesteuerung (1) nach einem der vorangehenden Ansprüche mit den Verfahrensschritten:
- Bereitstellen eines Gehäuseoberteils (3), eines Gehäusemittelteils (4) und eines Gehäuseunterteils (5) sowie einer elektronischen Steuerungseinheit (17) und mindestens einer Mechatronikkomponente (19, 20, 21) der Getriebesteuerung,
- Befestigen der elektronischen Steuerungseinheit (17) unmittelbar an dem Gehäuseoberteil (3),
- Befestigen der mindestens einen Mechatronikkomponente (19, 29, 21) an dem Gehäuseoberteil (3) unter Zwischenlage eines Gehäusemittelteilabschnitts (23) und
- Befestigen des Gehäuseoberteils (3) mitsamt der elektronischen Steuerungseinheit (17) und der mindestens einen Mechatronikkomponente (19, 20, 21) und dem Gehäusemittelteil (4) an dem Gehäuseunterteil (5).

## Claims

1. Transmission controller (1) having an electronic control unit (17), at least one mechatronic component (19, 20, 21) and a multi-part housing (2) having a housing upper part (3), a housing lower part (5) and a housing central part (4) which is arranged between the housing upper part (3) and the housing lower part (5) so as to form at least one holding chamber (8, 10, 11, 12) for the control unit (17) and the at least one mechatronic component (19, 20, 21), with the control unit (17) and the at least one mechatronic component (19, 20, 21) being fastened to the housing upper part (3), **characterized in that** the electronic control unit (17) and/or the at least one mechatronic component (19, 20, 21) is fastened to the housing upper part (3) with the interposition of a housing central part section (23), and the housing central part (4) is likewise fastened to the housing upper part (3) by the fastening of the electronic control unit (17) and/or of the at least one mechatronic component (19, 20, 21) to the housing upper part (3).

2. Transmission controller according to Claim 1, **characterized in that** the housing upper part (3) is formed in one piece.

3. Transmission controller according to one of Claims 1 and 2, **characterized in that** electrical conductors for connecting the electronic control unit (17) and/or the at least one mechatronic component (19, 20, 21) are provided on the housing central part (4), with the terminals (28) of the electrical conductors being arranged on the housing central part (4) in such a way that the electronic control unit (17) and/or the at least one mechatronic component (19, 20, 21) is automatically connected to the terminal (28) when the control unit (17) and/or the at least one mechatronic component (19, 20, 21) is fastened to the housing upper part (3).

4. Transmission controller according to one of the preceding claims, **characterized in that** the electronic control unit (17) is fastened directly to the housing upper part (3).

5. Transmission controller according to Claim 4, **characterized in that** the housing central part (4) is designed such that a first holding chamber (8) is formed which is delimited only by the housing upper part (3) and the housing central part (4), which is sealed off with respect to other holding chambers (10, 11, 12) for mechatronic components (19, 20, 21), and in which only the electronic control unit (17) is arranged.

6. Transmission controller according to one of the preceding claims, **characterized in that** sealing means (9, 16) are provided on the housing upper part (3), the housing lower part (5) and/or the housing central part (4), which sealing means (9, 16) serve to generate mutual sealing between the holding chambers (8, 10, 11, 12) or sealing of the holding chambers (8, 10, 11, 12) with respect to the environment.

7. Transmission controller according to one of the preceding claims, **characterized in that** the electronic control unit (17) and/or the at least one mechatronic component (19, 20, 21) are fastened to the housing upper part (3) by means of screws (22).

8. Transmission controller according to Claim 7, **characterized in that** the screws (22) extend through cutouts (24, 25) in the control unit (17) and/or in the at least one mechatronic component (19, 20, 21) and/or in the housing central part (4), with a sleeve (27) being provided in the cutout (24, 25).

9. Transmission controller according to one of the preceding claims, **characterized in that** the housing upper part (3) and the housing lower part (5) are composed of metal, while the housing central part (4) is composed of plastic.

10. Transmission controller according to one of the preceding claims, **characterized in that** the housing lower part (5) is formed in one piece with a transmission housing.

11. Transmission controller according to one of the preceding claims, **characterized in that** the housing upper part (3) is fastened to a transmission housing (6) with the interposition of the housing central part (4) and the housing lower part (5).

12. Transmission controller according to one of the preceding claims, **characterized in that** the housing upper part (3) and the housing lower part (5) adjoin one another only indirectly.

13. Transmission controller according to one of the preceding claims, **characterized in that** the housing central part (4) is arranged between the housing upper part (3) and the housing lower part (5) so as to be visible from the outside.

14. Transmission controller according to one of the preceding claims, **characterized in that** an outer terminal (29) for connecting the electronic control unit (17) to an external device is provided on the housing central part (4).

15. Transmission controller according to one of the preceding claims, **characterized in that** the at least one mechatronic component (19, 20, 21) is a sensor or an actuator.

16. Method for assembling a transmission controller (1) according to one of the preceding claims, having the method steps:
- providing a housing upper part (3), a housing central part (4) and a housing lower part (5) and also an electronic control unit (17) and at least one mechatronic component (19, 20, 21) of the transmission controller (1),
- fastening the electronic control unit (17) directly to the housing upper part (3),
- fastening the at least one mechatronic component (19, 20, 21) to the housing upper part (3) with the interposition of a housing central part section (23), and
- fastening the housing upper part (3) together with the electronic control unit (17) and the at least one mechatronic component (19, 20, 21) and the housing central part (4) to the housing lower part (5).

## Revendications

1. Commande de boîte de vitesses (1) présentant une unité de commande électronique (17), au moins un composant mécatronique (19, 20, 21) et un boîtier en plusieurs parties (2) avec une partie supérieure de boîtier (3), une partie inférieure de boîtier (5) et une partie centrale de boîtier (4), qui est disposée entre la partie supérieure de boîtier (3) et la partie inférieure de boîtier (5) en formant au moins un espace de réception (8, 10, 11, 12) pour l'unité de commande (17) et l'au moins un composant mécatronique (19, 20, 21), l'unité de commande (17) et l'au moins un composant mécatronique (19, 20, 21) étant fixés sur la partie supérieure de boîtier (3), **caractérisée en ce que** l'unité de commande électronique (17) et/ou l'au moins un composant mécatronique (19, 20, 21) sont fixés sur la partie supérieure de boîtier (3) en interposant une portion de partie centrale de boîtier (23) et la partie centrale de boîtier (4) est fixée également à la partie supérieure de boîtier (3) par fixation de l'unité de commande électronique (17) et/ou de l'au moins un composant mécatronique (19, 20, 21) à la partie supérieure de boîtier (3).

2. Commande de boîte de vitesses selon la revendication 1, **caractérisée en ce que** la partie supérieure de boîtier (3) est réalisée d'une seule pièce.

3. Commande de boîte de vitesses selon l'une quelconque des revendications 1 ou 2, **caractérisée en ce que** des conducteurs électriques sont prévus sur la partie centrale de boîtier (4) pour relier l'unité de commande électronique (17) et/ou l'au moins un composant mécatronique (19, 20, 21), les raccords (28) des conducteurs électriques étant disposés sur la partie centrale de boîtier (4) de telle sorte que l'unité de commande électronique (17) et/ou l'au moins un composant mécatronique (19, 20, 21) soient connectés automatiquement au raccord (28), quand l'unité de commande (17) et/ou l'au moins un composant mécatronique (19, 20, 21) sont fixés sur la partie supérieure de boîtier (3).

4. Commande de boîte de vitesses selon l'une quelconque des revendications précédentes, **caractérisée en ce que** l'unité de commande électronique (17) est fixée directement sur la partie supérieure de boîtier (3).

5. Commande de boîte de vitesses selon la revendication 4, **caractérisée en ce que** la partie centrale de boîtier (4) est réalisée de telle sorte qu'un premier espace de réception (8) soit produit, lequel est limité seulement par la partie supérieure de boîtier (3) et la partie centrale de boîtier (4), est rendu étanche par rapport à d'autres espaces de réception (10, 11, 12) pour des composants mécatroniques (19, 20, 21) et dans lequel est disposée seulement l'unité de commande électronique (17).

6. Commande de boîte de vitesses selon l'une quelconque des revendications précédentes, **caractérisée en ce que** sur la partie supérieure de boîtier (3), la partie inférieure de boîtier (5) et/ou la partie centrale de boîtier (4) sont prévus des moyens d'étanchéité (9, 16), qui permettent de réaliser une étanchéité mutuelle entre les espaces de réception (8, 10, 11, 12) ou une étanchéité des espaces de réception (8, 10, 11, 12) par rapport à l'environnement.

7. Commande de boîte de vitesses selon l'une quelconque des revendications précédentes, **caractérisée en ce que** l'unité de commande électronique (17) et/ou l'au moins un composant mécatronique (19, 20, 21) sont fixés sur la partie supérieure de boîtier (3) à l'aide de vis (22).

8. Commande de boîte de vitesses selon la revendication 7, **caractérisée en ce que** les vis (22) s'étendent à travers des évidements (24, 25) dans l'unité de commande (17) et/ou dans l'au moins un composant mécatronique (19, 20, 21) et/ou dans la partie centrale de boîtier (4), une douille (27) étant prévue dans l'évidement (24, 25).

9. Commande de boîte de vitesses selon l'une quelconque des revendications précédentes, **caractérisée en ce que** la partie supérieure de boîtier (3) et la partie inférieure de boîtier (5) se composent de métal, tandis que la partie centrale de boîtier (4) se compose de plastique.

10. Commande de boîte de vitesses selon l'une quelconque des revendications précédentes, **caractérisée en ce que** la partie inférieure de boîtier (5) est réalisée d'une seule pièce avec un boîtier de la boîte de vitesses.

11. Commande de boîte de vitesses selon l'une quelconque des revendications précédentes, **caractérisée en ce que** la partie supérieure de boîtier (3) est fixée à un boîtier de boîte de vitesses (6) en interposant la partie centrale de boîtier (4) et la partie inférieure de boîtier (5).

12. Commande de boîte de vitesses selon l'une quelconque des revendications précédentes, **caractérisée en ce que** la partie supérieure de boîtier (3) et la partie inférieure de boîtier (5) sont adjacentes l'une à l'autre seulement de manière indirecte.

13. Commande de boîte de vitesses selon l'une quelconque des revendications précédentes, **caractérisée en ce que** la partie centrale de boîtier (4) est disposée de manière visible depuis l'extérieur entre la partie supérieure de boîtier (3) et la partie inférieure de boîtier (5).

14. Commande de boîte de vitesses selon l'une quelconque des revendications précédentes, **caractérisée en ce qu'**un raccord extérieur (29) pour relier l'unité de commande électronique (17) à un dispositif externe est prévu sur la partie centrale de boîtier (4).

15. Commande de boîte de vitesses selon l'une quelconque des revendications précédentes, **caractérisée en ce que** l'au moins un composant mécatronique (19, 20, 21) est un capteur ou un actionneur.

16. Procédé de montage d'une commande de boîte de vitesses (1) selon l'une quelconque des revendications précédentes, comprenant les étapes suivantes :
- fourniture d'une partie supérieure de boîtier (3), d'une partie centrale de boîtier (4) et d'une partie inférieure de boîtier (5) ainsi que d'une unité de commande électronique (17) et d'au moins un composant mécatronique (19, 20, 21) de la commande de boîte de vitesses (1),
- fixation de l'unité de commande électronique (17) directement sur la partie supérieure de boîtier (3),
- fixation de l'au moins un composant mécatronique (19, 20, 21) sur la partie supérieure de boîtier (3) en interposant une portion de partie centrale de boîtier (23) et
- fixation de la partie supérieure de boîtier (3) conjointement à l'unité de commande électronique (17) et à l'au moins un composant mécatronique (19, 20, 21) et à la partie centrale de boîtier (4) sur la partie inférieure de boîtier (5).
